# EUROPÄISCHE PATENTSCHRIFT

(11) **EP 1 411 488 B1**
(45) Veröffentlichungstag und Bekanntmachung des Hinweises auf die Patenterteilung: **25.01.2006**
(21) Anmeldenummer: 03450123.9
(22) Anmeldetag: 19.05.2003
(51) Int. Cl.: G09F 21/12

(54) **Banner**
Banner
Bannière

(30) Priorität: 14.10.2002 AT 6802002 U
(43) Veröffentlichungstag der Anmeldung: 21.04.2004
(73) Patentinhaber: Schimanz, Gerhard, 9061 Wölfnitz (AT)
(72) Erfinder: Schimanz, Gerhard, 9061 Wölfnitz (AT)
(74) Vertreter: Hehenberger, Reinhard

(56) Entgegenhaltungen:
- CH-A- 152 104
- FR-A- 1 014 810

## Beschreibung

Die Erfindung betrifft ein Banner, wie es von Flugzeugen geschleppt wird und beispielsweise Werbeaufdrucke trägt, wie in CH-A-152 104 beschrieben wird.

Die bekannten Banner besitzen eine mit dem vorderen Ende des Banners verbundene Bannerstange, die über eine sogenannte "Bannerspinne" und über ein Schleppseil mit dem das Banner schleppenden Flugzeug verbunden ist.

Bei bekannten Bannern ist es nicht möglich, diese über das Schleppseil noch vor dem Start mit dem Flugzeug, welches das Banner schleppen soll, zu verbinden.

Es wird daher so gearbeitet, dass das Banner gegebenenfalls gefaltet auf der Startbahn aufgelegt wird und die Bannerspinne über ein kurzes Verbindungsseil mit einem sogenannten "Loop" (in sich geschlossene Seilschlinge) verbunden wird. Das Loop wird an zwei Stangen befestigt, so dass ein Teil gespannt ist und der andere Teil, an dem die Bannerspinne befestigt ist, nach unten durchhängt. Ein Flugzeug, an dem ein Schleppseil mit Haken am freien Ende befestigt ist, fliegt nun so über das Loop, dass das obere horizontale Stück des Loop mit dem Schleppseil gekuppelt wird. Ein solches Verfahren wird in FR-A- 1 014 810 beschrieben.

Dies ist nicht nur eine zeitaufwändige, sondern auch eine nicht ungefährliche fliegerische Tätigkeit, da die Gefahr besteht, dass sich das Fahrwerk des Flugzeuges im Loop verhängt oder aber der Haken am Schleppseil beispielsweise am Boden hängenbleibt, was im schlimmsten Fall dazu führt, dass das Flugzeug abstürzt.

Der Erfindung liegt die Aufgabe zu Grunde, ein Banner der eingangs genannten Gattung so weiter zu bilden, dass es schon vor dem Start mit dem das Banner schleppenden Flugzeug verbunden werden kann.

Gelöst wird diese Aufgabe mit einem Banner, das die Merkmale von Anspruch 1 aufweist.

Bevorzugte und vorteilhafte Ausgestaltungen des erfindungsgemäßen Banners sind Gegenstand der Unteransprüche.

Dadurch, dass an der Bannerstange Scheiben befestigt sind, welche die Bannerstange im Abstand vom Boden halten, kann die Bannerstange und das an ihr befestigte Banner einschließlich der Spinne über das Schleppseil schon vor dem Start mit dem Flugzeug verbunden werden. Durch den vom Propeller des startenden Flugzeuges erzeugten "Wind" wird das Banner vom Boden abgehoben, da die Bannerstange dank der Scheiben vom Boden, also von der Oberseite der Startbahn, Abstand hat. So ist ein problemloses Starten möglich.

Die Zahl und die Art der, beispielsweise als Räder dienenden, Scheiben an der Bannerstange ist beliebig und wird unter anderem von der Größe (Breite) des Banners und dessen Gewicht abhängen. Häufig genügen aber zwei Scheiben.

Weitere Einzelheiten, Merkmale und Vorteile der Erfindung ergeben sich aus der nachstehenden Beschreibung mit Bezug auf die Zeichnungen, in denen ein Ausführungsbeispiel gezeigt ist.
Fig. 1 zeigt in schematisierter Darstellung ein Banner, das von einem Flugzeug geschleppt wird,
Fig. 2 das am Boden aufgelegte Banner teilweise in Schrägansicht,
Fig. 3 das Banner (teilweise) in Ansicht von vorne,
Fig. 4 und 5 in auseinandergezogenen Darstellungen als Räder dienende Scheiben an den Enden der Bannerstange.

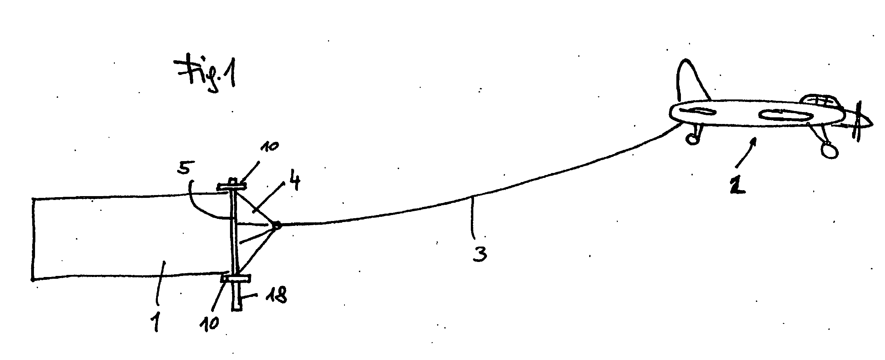

Wie in Fig. 1 gezeigt, wird ein Banner 1 von einem Flugzeug 2 geschleppt, mit dem es über ein Schleppseil 3 und eine Bannerspinne 4 gekuppelt ist. Am vorderen Ende des Banners 1 ist eine Bannerstange 5 vorgesehen, an der beidseits des Banners 1 Scheiben 10 (Räder) vorgesehen sind.

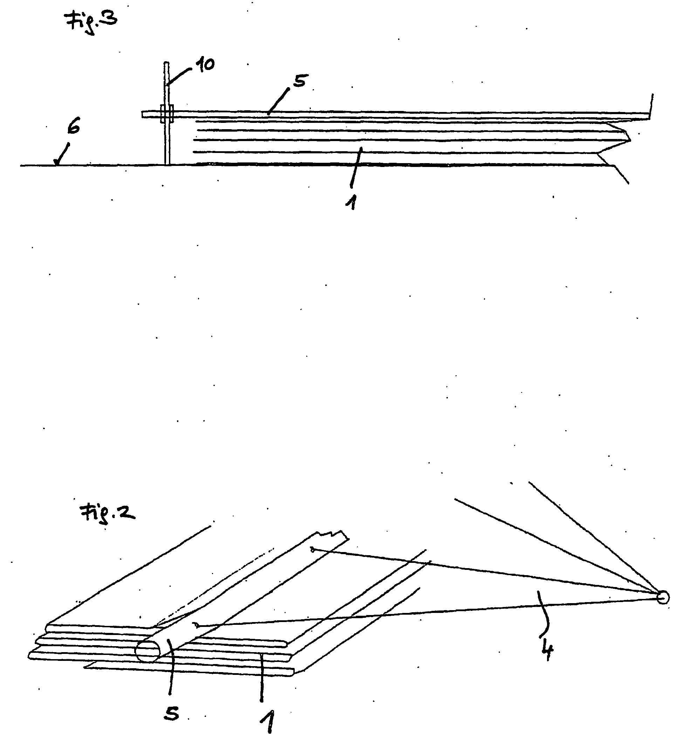

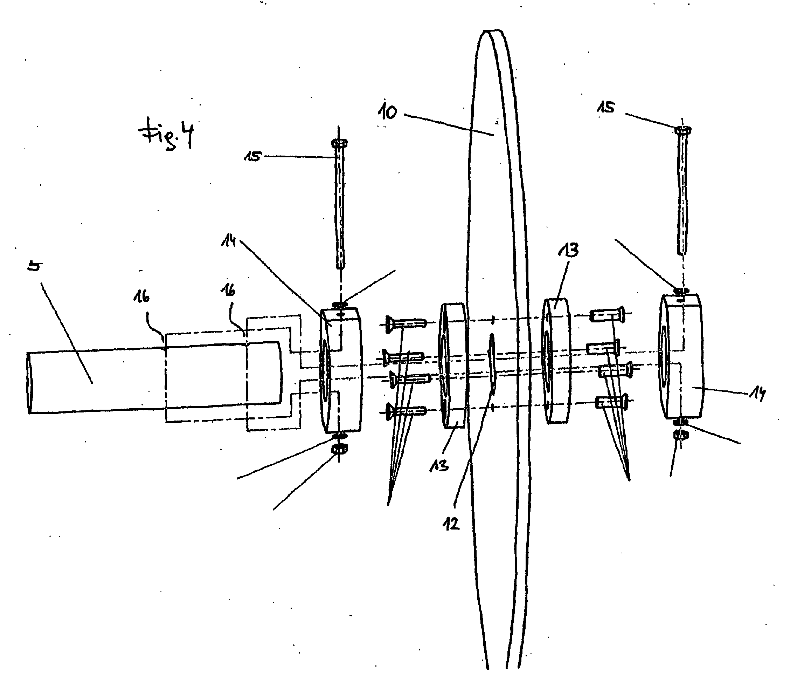

Vor dem Start wird das Banner 1, so wie es in den Fig. 2 und 3 gezeigt ist, gegebenenfalls gefaltet, auf der Startbahn 6 aufgelegt, wobei die an den Enden der Bannerstange 5 vorgesehenen Scheiben 10 neben dem gefaltet aufgelegten Banner 1 auf der Oberfläche der Startbahn 6 aufliegen (in Fig. 2 sind diese Scheiben 10 nicht gezeigt). Diese Situation ist in Fig. 3 gezeigt.

Wenn nun das Flugzeug 2 startet, wird durch den Wind des Propellers das Banner 1, das an seinem vorderen mit der Bannerstange 5 verbundenen Ende durch die Scheiben 10 im Abstand von der Oberfläche der Startbahn 6 gehalten wird, wenigstens über den Großteil seiner Länge, im Abstand über der Startbahn 6 angeordnet sein, so dass es den Start des Flugzeuges 2 durch Schleifen am Boden 6 nicht behindert.

Um die Bremswirkung des Banners 1 und der Bannerstange 5 klein zu halten, sind die Scheiben 10 an der Bannerstange 5 bevorzugt (frei) drehbar angebracht, wirken also als Räder.

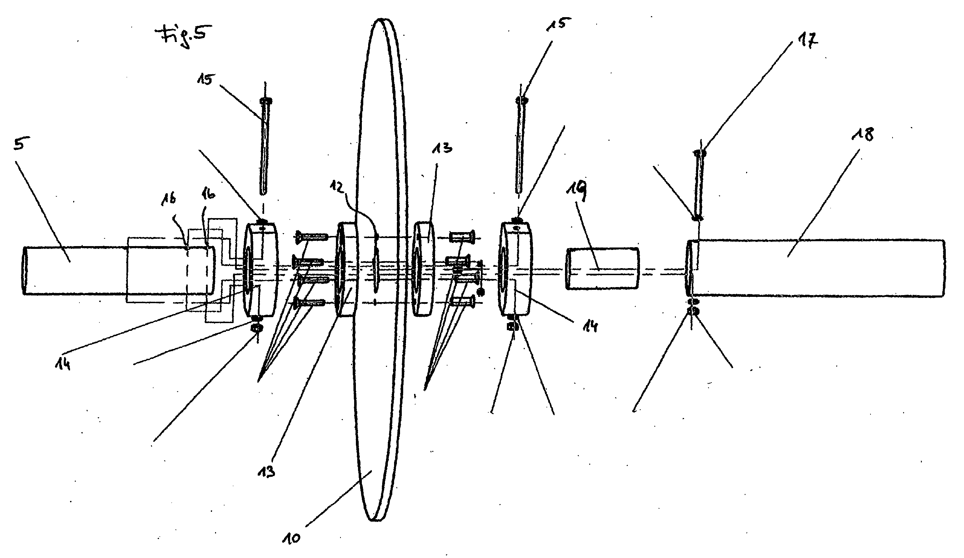

Eine mögliche Ausführungsform von Scheiben 10, die als Räder wirken, ist in den Fig. 4 und 5 jeweils in auseinandergezogener Darstellung gezeigt.

Dabei zeigt Fig. 4 die Scheibe 10, die kreisrund ist und rechts und links ihrer Lageröffnung 12 durch angeschraubte oder angenietete Laufscheibenflansche 13 verstärkt ist, so dass sie auf der Bannerstange 5 gleichmäßig und möglichst reibungsfrei laufen kann. Rechts und links der mit den Laufscheibenflanschen 13 bestückten Scheibe 10 sind Lagerböcke 14 vorgesehen, die mit der Bannerstange 5 mit Hilfe von Schrauben 15 verbunden sind, die Löcher 16 in der Bannerstange 5 durchgreifen. Zwischen diesen Lagerböcken 14 ist die Scheibe 10 als Rad drehbar aufgenommen.

Das in Fig. 4 gezeigte Ende der Bannerstange ist das Ende "ohne Gewicht", wogegen das in Fig. 5 gezeigte Ende das Ende der Bannerstange "mit Gewicht" 19 ist, das am äußeren Ende der Bannerstange 5, also außerhalb der Scheibe 10 durch eine Schraube 17 an der Bannerstange 5 befestigt wird. Durch das Gewicht 19 und den ebenfalls mit der Schraube 17 an der Bannerstange 5 befestigten Sturzschlauch 18 wird erreicht, dass die Bannerstange 5 und damit das Banner 1 beim Schleppen durch ein Flugzeug 2 während des Fluges eine im wesentlichen lotrechte Lage einnimmt, da das Ende der Bannerstange 5 mit Gewicht 19 und Sturzschlauch 18 nach unten weist.

Zusammenfassend kann ein Ausführungsbeispiel der Erfindung wie folgt beschrieben werden:

Ein Banner 1, das über ein Schleppseil 3 von einem Flugzeug 2 zu schleppen ist, besitzt eine Bannerstange 5, die mit dem Schleppseil 3 über eine Bannerspinne 4 verbunden ist. Beidseitig des Banners 1 sind an der Bannerstange 5 als Laufräder dienende Scheiben 10 drehbar gelagert. Dadurch wird die Bannerstange 5 vor dem Start im Abstand von der Oberfläche der Startbahn 6 gehalten, so dass unter der Wirkung des vom Propeller des Flugzeuges 2 erzeugten "Windes" das Banner 1 nicht auf der Startbahn 6 aufliegt, also ein problemloses Starten des Flugzeuges 2 mit angekuppeltem Banner 1 möglich ist.

## Patentansprüche

1. Banner (1) mit Bannerstange (5), das über eine Bannerspinne (4) und ein Schleppseil (3) mit einem Flugzeug (2) kuppelbar ist, **dadurch gekennzeichnet, dass** an der Bannerstange (5) wenigstens zwei Scheiben (10) angeordnet sind.

2. Banner nach Anspruch 1, **dadurch gekennzeichnet, dass** die Scheiben (10) kreisrund sind.

3. Banner nach Anspruch 1 oder 2, **dadurch gekennzeichnet, dass** die Scheiben (10) an der Bannerstange (5) drehbar gelagert sind.

4. Banner nach einem der Ansprüche 1 bis 3, **dadurch gekennzeichnet, dass** die Scheiben (10) an den Enden der Bannerstange (5) neben beiden Längsrändern des Banners (1) angeordnet, insbesondere drehbar gelagert, sind.

5. Banner nach einem der Ansprüche 1 bis 4, **dadurch gekennzeichnet, dass** die Scheiben (10) beidseitig Laufscheibenflansche (13) tragen und über diese drehbar auf der Außenfläche der Bannerstange (5) sitzen.

6. Banner nach einem der Ansprüche 1 bis 5, **dadurch gekennzeichnet, dass** zur Lagesicherung der Scheiben (10) beidseits der Scheiben (10) bzw. der mit ihnen verbundenen Laufscheibenflansche (13) Lagerböcke (14) vorgesehen sind.

7. Banner nach Anspruch 6, **dadurch gekennzeichnet, dass** die Lagerböcke (14) mit der Bannerstange (5) verbunden sind.

8. Banner nach Anspruch 7, **dadurch gekennzeichnet, dass** die Lagerböcke (14) mit Hilfe von die Bannerstange (5) durchsetzenden Schrauben (15) an der Bannerstange (5) befestigt sind.

9. Banner nach einem der Ansprüche 1 bis 7, **dadurch gekennzeichnet, dass** an einem Ende der Bannerstange (5) ein Gewicht (19) vorgesehen ist.

10. Banner nach Anspruch 9, **dadurch gekennzeichnet, dass** das Gewicht (19) innerhalb der Bannerstange (5) angeordnet ist.

11. Banner nach Anspruch 9 oder 10, **dadurch gekennzeichnet, dass** das mit Gewicht (19) versehene Ende der Bannerstange (5) durch einen Sturzschlauch (18) verlängert ist.

12. Banner nach einem der Ansprüche 9 bis 11, **dadurch gekennzeichnet, dass** das Gewicht (19) und der Sturzschlauch (18) durch eine die Bannerstange (5) querende Schraube (17) mit dieser verbunden ist.

## Claims

1. Banner (1) with a banner rod (5) which can be coupled to an aircraft (2) via a banner spider (4) and a tow rope (3), **characterized in that** there are at least two disks (10) on the banner rod (5).

2. Banner as claimed in claim 1, wherein the disks (10) are circular.

3. Banner as claimed in claim 1 or 2, wherein the disks (10) are rotatably mounted on the banner rod (5).

4. Banner as claimed in one of claims 1 to 3, wherein the disks (10) are located, especially rotatably mounted, on the ends of the banner rod (5) next to the two lengthwise edges of the banner (1).

5. Banner as claimed in one of claims 1 to 4, wherein the disks (10) on either side bear running disk flanges (13) and via them sit rotatably on the outer surface of the banner rod (5).

6. Banner as claimed in one of claims 1 to 5, wherein to secure the position of the disks (10) on either side of the disks (10) or the running disk flanges (13) connected to them there are brackets (14).

7. Banner as claimed in claim 6, wherein the brackets (14) are connected to the banner rod (5).

8. Banner as claimed in claim 7, wherein the brackets (14) are attached to the banner rod (5) using screws (15) which pass through the banner rod (5).

9. Banner as claimed in one of claims 1 to 7, wherein there is a weight (19) on one end of the banner rod (5).

10. Banner as claimed in claim 9, wherein the weight (19) is located within the banner rod (5).

11. Banner as claimed in claim 9 or 10, wherein the end of the banner rod (5) provided with weight (19) is lengthened by a dive hose (18).

12. Banner as claimed in one of claims 9 to 11, wherein the weight (19) and the dive hose (18) are connected to the banner rod by a screw (17) which passes through the banner rod (5).

## Revendications

1. Banderole (1) avec barre de fixation (5) qui peut être attelée à un avion (2) par l'intermédiaire d'une araignée de tractage (4) et d'un câble de remorquage (3), **caractérisée en ce que** deux disques (10) au moins sont disposés sur la barre de fixation (5).

2. Banderole selon la revendication 1, **caractérisée en ce que** les disques (10) sont circulaires.

3. Banderole selon la revendication 1 ou 2, **caractérisée en ce que** les disques (10) sont logés de manière orientable sur la barre de fixation de la banderole (5).

4. Banderole selon l'une des revendications 1 à 3, **caractérisée en ce que** les disques (10) sont disposés, en particulier logés de manière orientable, aux extrémités de la barre de fixation de la banderole (5), à côté des deux bords longitudinaux de la banderole.

5. Banderole selon l'une des revendications 1 à 4, **caractérisée en ce que** les disques (10) portent une flasque sur chacune de leurs faces, par l'intermédiaire de laquelle ils sont placés de manière orientable sur la face extérieure de la barre de fixation de la banderole (5).

6. Banderole selon l'une des revendications 1 à 5, **caractérisée en ce que** des supports (14) sont prévus de part et d'autre des disques (10), c'est-à-dire de part et d'autre des flasques (13) reliées aux disques, afin de bloquer la position de ceux-ci.

7. Banderole selon la revendication 6, **caractérisée en ce que** les supports (14) sont reliés à la barre de fixation de la banderole (5).

8. Banderole selon la revendication 7, **caractérisée en ce que** les supports (14) sont fixés à la barre de fixation de la banderole (5) au moyen de vis (15) traversant celle-ci.

9. Banderole selon l'une des revendications 1 à 7, **caractérisée en ce qu'**un poids (19) est prévu à une extrémité de la barre de fixation de la banderole (5).

10. Banderole selon la revendication 9, **caractérisée en ce que** le poids (19) est disposé à l'intérieur de la barre de fixation de la banderole (5).

11. Banderole selon la revendication 9 ou 10, **caractérisée en ce que** l'extrémité pourvue du poids (19) de la barre de fixation de la banderole (5) est prolongée par un tuyau de décharge (18).

12. Banderole selon l'une des revendications 9 à 11, **caractérisée en ce que** le poids (19) et le tuyau de décharge (18) sont reliés à la barre de fixation de la banderole (5) au moyen d'une vis (17) traversant celle-ci.
